# EUROPEAN PATENT APPLICATION

(11) **EP 0 965 625 A1**
(43) Date of publication of application: **22.12.1999**
(21) Application number: 99830356.4
(22) Date of filing: 08.06.1999
(51) Int. Cl.: C09J 7/02

(54) **Coextruded adhesive tape**

(30) Priority: 19.06.1998 IT FI980147
(71) Applicant: SYROM 90 S.p.A., I-50059 Vinci (Firenze) (IT)
(72) Inventor: Nassi, Aldo, 50053 Empoli (Firenze) (IT)
(74) Representative: Mannucci, Gianfranco, Dott.-Ing.

(57) **Abstract**

An adhesive tape is described, comprising a coextruded support, with at least one layer of polypropylene (2) and one layer of high-density polyethylene (3). One of the surfaces of the support is treated by a process for increasing its surface energy, and an adhesive mass (1) is applied to this surface.

## Description

### Technical field

The present invention relates to an adhesive tape of the type comprising a plastic support and an adhesive applied to one of the surfaces of said support.

The present invention also relates to a method for producing an adhesive tape of the abovementioned type.

### State of the art

In the production of adhesive tapes with plastic supports, polypropylene is currently frequently used as a base component for the production of the support onto which the adhesive mass is then applied. Compared with other polymers, such as, for example, polyvinyl chloride, polypropylene has appreciable advantages, including: better resistance to low temperatures, better resistance to heat, a lower density and thus a lower price per unit of surface area.

However, compared with polyvinyl chloride, polypropylene has a number of drawbacks, including: difficulty in printing; the need to use, with certain types of adhesive, a release agent to allow unwinding; the high level of noise during unrolling; the need to use, in combination with certain types of adhesive, a primer in order to increase the adhesion of the adhesive mass to the support.

The release agent is applied during the spreading phase, in a solution of a mixture of xylene/toluene solvents which are removed, after the application, in ovens in which said solvents are evaporated off. This entails high costs in terms of starting material and energy, not to mention the ecological and environmental drawbacks.

The application of the primer to increase the printability and/or to increase the fixing of the adhesive mass to the polypropylene support presents similar problems.

To overcome the problems inherent in the use of polypropylene as a support material for adhesive tapes, various solutions based on the use of coextruded films, formed from several layers based on polypropylene with different additives, have been proposed. For example, in US-A-4,673,611, it is suggested to use a co-extrudate formed from two layers of polypropylene of different composition, one of which (and specifically the one not in contact with the adhesive mass) contains polydiorganosiloxane as anti-adhesive agent.

US-A-4,716,068 describes the use of a coextruded film which has at least three layers of polypropylene, one of which has diorganopolysiloxane added, and another has a modifying resin, in particular a ketone resin, a polyamide resin, an aldehyde resin or the like.

The present invention proposes to solve the abovementioned problems in a different and more effective way.

### Objects of the invention

The general object of the present invention is to propose a different structure for an adhesive tape which simply and effectively overcomes one or more of the drawbacks of polypropylene-based adhesive tapes.

According to a first aspect of the present invention, a first object is to prepare an adhesive tape which has improved unwindability properties, without the need to apply a layer of release agent.

According to a further aspect of the present invention, another object is to prepare an adhesive tape which has improved printability properties.

According to a third aspect of the present invention, a further object is to prepare an adhesive tape which has improved properties in terms of fixing of the adhesive mass onto the support film, without the need to use a primer.

### Summary of the invention

In general, according to the invention, an adhesive tape is envisaged comprising a coextruded support, with a layer of polypropylene and a layer of high-density polyethylene, at least one of the surfaces of said support being treated by a process for increasing its surface energy. In addition, an adhesive mass is applied to the treated surface. According to the invention, the properties of the high-density polyethylene are used to overcome the abovementioned problems, which are typical of polypropylene-based adhesive tapes.

More specifically, for the purpose of avoiding the drawbacks derived from the need to use a release agent in order to allow unwinding of the adhesive tape, according to a first aspect of the present invention, an adhesive tape is envisaged in which the outer surface of the polypropylene layer is treated by a process for increasing its surface energy, for example a flame treatment or a corona treatment, and the adhesive mass is applied to this surface. The layer of high-density polyethylene is coupled to the layer of polypropylene on the surface of the latter layer which is opposite the treated surface onto which the adhesive mass is applied. In this case, the higher anti-adhesive nature of the high-density polyethylene compared with polypropylene is used. This nature is such that the adhesive mass is not excessively fixed onto the back of the tape, consisting of the outer surface of the polyethylene, as a result of which the tape is unrolled even without the need to apply a release agent.

In order to further improve the unwindability of the tape, one or more polyorganosiloxane-based substances can be added to the high-density polyethylene layer during the extrusion phase.

For the purpose of avoiding the drawbacks derived from poor printability properties of the polypropylene and/or to eliminate the need for the primer when adhesive masses based on natural rubber are used, according to a further aspect of the present invention, an adhesive tape is envisaged in which the outer surface of the high-density polyethylene layer is treated by a process for increasing its surface energy and the adhesive mass is applied to said treated surface.

In this case, use is made of the high surface energy which can be obtained by treating the outer surface of the layer of high-density polyethylene in order to obtain a better quality of print and greater fixing of the inks during the phase of pre-printing of the film compared with the usual polypropylene film. The advantage is clear when inks based on water-dispersed acrylic resins are used.

It is moreover possible to exploit the high surface energy of the layer of flame-treated or corona-treated high-density polyethylene to prepare an adhesive tape based on natural rubber and hydrocarbon resins without the usual application of a layer of primer between the film and the adhesive mass, with advantages - in terms of savings in starting materials and in energy, not to mention the environmental impact- similar to those derived from the elimination of the layer of release agent.

Further characteristic advantages of the adhesive tape and of the method for producing it according to the invention are indicated in the attached claims.

### Brief description of the drawings

The invention will be understood more clearly by means of the description and the attached drawing, which shows a non-limiting embodiment of the invention. In the drawing:
Fig. 1 schematically shows, in cross section, the structure of the coextruded film in one possible embodiment;
Fig. 2 schematically shows, in cross section, the structure of the adhesive tape obtained with the film of Fig. 1;
Fig. 3 shows a phase of pre-printing of an adhesive tape;
Fig. 4 schematically shows the test of adhesion of the adhesive mass to the support film;
Fig. 5 shows the characteristics of two different types of film in terms of adhesion of the adhesive mass as a function of the amount of crosslinking agent used;
Fig. 6 schematically shows, in greatly enlarged cross section, the structure of an adhesive tape in a second embodiment; and
Fig. 7 schematically shows, in greatly enlarged cross section, the structure of an adhesive tape in a third embodiment.

The figures are given as guides and are not to scale. In particular, the ratio between the thicknesses of the various layers constituting the film is entirely arbitrary.

### Detailed description of the preferred embodiments of the invention

### 1 ) General properties of the film forming the support for the tape

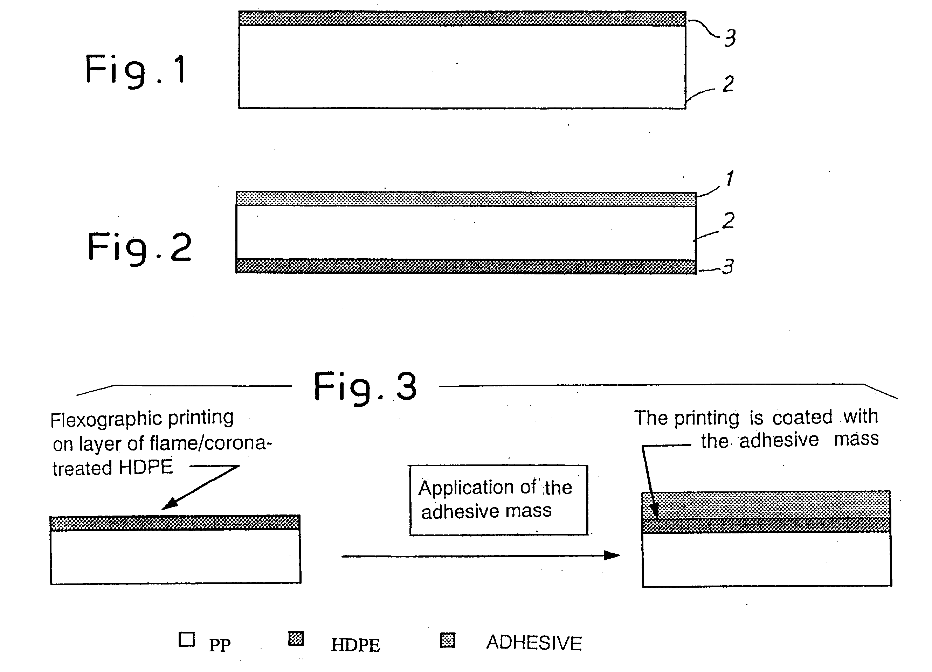

Fig. 1 shows, in general terms, the structure of the support based on polypropylene (PP) and high-density polyethylene (HDPE) for the production of the adhesive tape according to the invention. This is a bi-oriented multilayer film of low thickness (20-40 µm) having the following structure:
Layer a)
   - high-density polyethylene
   - thickness: 0.5 - 3 µm
   - MFI (melt flow index) [ISO 1133] (190°C; 2.16 kg) : 0.4 - 8 g/10 min;
   - density at 23°C [ISO 1183]: 0.944 - 0.957 g/cm³
Layer b):
   - polypropylene
   - thickness: 19.5 - 37 µm;
   - MFI [ISO 1133] (230°C; 2.16 kg): 1.7 - 2.3 g/10 min;
   - density at 23°C [ISO 1183]: 0.9 g/cm³

The film is obtained by means a bubble plant provided with a three-layer die; two layers, namely the central layer and a side layer, are made of polypropylene, while the second side layer is made of high-density polyethylene. In Fig. 1, the reference number 2 indicates the layer of polypropylene and the reference number 3 indicates the layer of polyethylene.

The final product has mechanical properties (breaking load, elongation at break, etc.) similar to those of the polypropylene film produced by the same plant under the same drawing conditions, as can be seen from Table 1 below, in which are given the technical data relating to the coextruded PP/HDPE film with different properties of thickness, longitudinal drawing, transverse drawing and MFI (melt flow index) of the high-density polyethylene.

**Table 1**

| **Technical data relating to PP/HDPE films, produced with various thicknesses and under different drawing conditions, compared with the technical data for the PP film** | | | | | | |
|---|---|---|---|---|---|---|
| FILM STRUCTURE | Method | HDPE MFI 0.4 Thickness HDPE layer: 0.8 µ long. drawing: 5.8% transv. drawing: 6.75% | HDPE MFI 0.4 Thickness HDPE layer: 0.8 µ long. drawing: 6.2% transv. drawing: 6.75% | HDPE MFI 4 Thickness HDPE layer: 1.5 µ long. drawing: 6.8% transv. drawing: 6.0% | HDPE MFI 2 Thickness HDPE layer: 0.8 µ long. drawing: 6.2% transv. drawing: 6.75% | PP |
| WEIGHT PER UNIT AREA (g/m²) | | 25.2 | 25.2 | 25.2 | 28.8 | 25-29 |
| LONGITUDINAL BREAKING LOAD (N/mm²) | ASTM D 882 | 189 | 182 | 214 | 178 | 105-280 |
| TRANSVERSE BREAKING LOAD (N/mm²) | ASTM D 882 | 175 | 165 | 179 | 159 | 105-280 |
| LONG. ELONGATION (%) | ASTM D 882 | 141 | 126 | 96 | 116 | 70-130 |
| TRANSV. ELONGATION (%) | ASTM D 882 | 147 | 140 | 136 | 136 | 70-150 |
| Level of flame treatment (mN/m) | ASTM D 2578 | HDPE side: 54 PP side: 42 | HDPE side: 54 PP side: 42 | HDPE side: 54 PP side: 42 | HDPE side: 54 PP side: 42 | 42 |

### 2) Elimination of the release agent

The high-density polyethylene shows less adhesiveness than the polypropylene.

Table 2 which follows gives the data for adhesiveness on polypropylene films and high-density polyethylene films with three different MFI values; the data are expressed in N/25 mm. The data in Table 2 were obtained by the following method: the film was fixed, by means of a double adhesive, to a metal plate normally used for tests of adhesiveness. An adhesive tape was then applied, this tape consisting of a polypropylene support and an adhesive mass equal to 22 g/m² of a mixture of thermoplastic rubber (SIS), hydrocarbon resins and process oil, according to the method for measuring adhesiveness [180° peel (AFERA standard 4001)]. The measurements of the force required to detach the adhesive tape from the film were carried out 24 h after applying this tape.

**Table 2**

| **FILM** | **ADHESIVENESS (+/-3σ)** |
|---|---|
| PP | 11.9 (+/- 1.1) |
| HDPE MFI 0.4 | 6.8 (+/- 0.2) |
| HDPE MFI 2 | 6.1 (+/- 0.4) |
| HDPE MFI 4 | 5.1 (+/- 0.7) |

By exploiting this property of the high-density polyethylene, it is possible to obtain "hot melt" adhesive tapes (the term "hot melt" refers to adhesive tapes whose adhesive mass is based on thermoplastic rubber (SIS), hydrocarbon resins and process oil) without the application, during the spreading phase, of the layer of release agent, using the layer of high-density polyethylene as the backing for the tape.

In this case, the adhesive tape is obtained by treating the free surface of the polypropylene layer of the coextruded film in Fig. 1 with a flame treatment or with a corona treatment, until the desired surface energy, typically of about 42 mN/m, is reached. The adhesive mass based on thermoplastic rubber SIS, hydrocarbon resins and process oil is then applied to the surface thus treated. The adhesive tape obtained has the structure in Fig. 2, in which the reference number 1 indicates the layer of adhesive mass, the reference number 2 indicates the layer of polypropylene and the reference number 3 indicates the layer of high-density polyethylene.

Table 3 below gives a comparison between the technical data for the product thus obtained and for a conventional product, consisting of a polypropylene film, with a flame-treated surface and a surface coated with a layer of release agent.

**Table 3**

| TAPE STRUCTURE | Method | • PP/HDPE film of thickness 28 µm, flame-treated on the PP side; • HDPE MFI 4; • thickness of the HDPE layer: 1.5 µm | • film of thickness 28 µm, flame-treated on one side; • release agent on the back of the tape the range +/-3σ *is indicated in parentheses* |
|---|---|---|---|
| TOTAL WEIGHT (g/m²) | | 48.3 | 47.3 (42-52) |
| TOTAL WEIGHT (g/m²) | | 26.7 | 25.4 (23-28) |
| WEIGHT OF ADHESIVE (g/m²) | | 21.6 | 22 (17-27) |
| METAL ADHESIVENESS (N/25 mm) | AFERA 4001 | 13.5 | 14.5 (8.9-20.2) |
| SUPPORT ADHESIVENESS (N/25 mm) | PSTC-1 | 5.4 | 7.8 (4.8-10.9) |
| RBT (cm) | PSTC-6 | 3 | 4.7 (0-10) |
| BL (N/cm) | AFERA 4004 | 61.7 | 55.9 (29.4-78.4) |
| ELONGATION (%) | AFERA 4005 | 99 | 100 (47-153) |
| UNWINDING (N/cm) | AFERA 4013 | 3.4 | 1.4 (0.5-2.4) |

Lower unwinding values for the tape can be obtained by adding polyorganosiloxane-based substances to the layer of high-density polyethylene in the film during the extrusion. For example, amounts equal to 0.5-1.5% by weight of polydimethylsiloxane (viscosity at 25°C: 100-60,000 mm²/s) lower the unwinding value for the tape by 10-20% relative to the values obtained for tapes in the high-density polyethylene layer of which said substances are not present.

From the data given in Table 3 it is deduced that, with the coextruded film according to the present invention, an adhesive tape can be prepared without the need to apply the layer of release agent on the back, with the consequent advantages mentioned above.

### 3) Exploiting the high surface energy of HDPE

The coextruded film of Fig. 1 can also be used, again for the production of adhesive tapes, by exploiting the property of HDPE of having a higher surface energy than polypropylene, for equivalent treatment. This property can be used to make printing easier or to improve the fixing of the adhesive mass onto the film, or for both purposes.

In point of fact, the high surface energy of a layer of treated HDPE makes it possible to obtain a better quality of printing and better fixing of the inks during the phase of pre-printing of the film compared with the usual polypropylene film. The advantage is clear when inks based on water-dispersed acrylic resins are used.

Fig. 3 shows the printing process. In this case, the coextruded film in Fig. 1 is flame-treated or corona-treated on the exposed surface of the layer of high-density polyethylene, until the desired surface energy, for example of about 50-52 mN/m and preferably of 54 mN/m, is obtained. The surface thus treated is subjected to flexographic printing and the adhesive mass is then applied. Before applying the adhesive mass, a specific primer, of a type which is known per se, can optionally be applied if the adhesive used does not have sufficient affinity with the acrylic resins of the ink used. Depending on the adhesive used, it may also be necessary to apply a layer of release agent onto the back of the tape, i.e. (in this case) onto the outer surface of the layer of polypropylene. More particularly, the layer of release agent is required in the case of adhesives based on natural rubber or on SIS thermoplastic rubber, whereas it is not required in the case of water-dispersed polyacrylate-based adhesives. The primer is required in the case of an adhesive based on natural rubber, while it is not required in the case of an adhesive based on SIS thermoplastic rubber and on water-dispersed polyacrylates.

It is moreover possible to exploit the high surface energy of the layer of treated HDPE to prepare an adhesive tape based on natural rubber and hydrocarbon resins without the usual application of a layer of primer between the film and the adhesive mass.

In order to demonstrate the differences between a polypropylene film and a coextruded film of polypropylene and high-density polyethylene according to Fig. 1, a layer of adhesive based on natural rubber and hydrocarbon resins (amount of adhesive applied: 20 g/m²) was applied both to the flame-treated side of a polypropylene film (level of treatment: 42 mN/m) of thickness equal to 28 µm, and to the flame-treated side of HDPE (level of treatment: 54 mN/m) of a PP/HDPE coextruded film of thickness equal to 28 µm.

Increasing amounts of crosslinking agent (4,4'-diphenylmethane diisocyanate; Suprasec DNR; ICI Italia S.p.A) were added to the adhesive just before the application of this adhesive to the film.

In order to confirm the fixing of the layer of adhesive mass onto the film forming the tape support, the following method was used (fixing (f/f)):
a) removal of the three outermost tums of the roll before taking the samples;
b) taking a sample of about 300 mm in length;
c) joining together the adhesive part of the sample (the joined area needs to be at least 50 cm²);
d) pulling the end of the sample so as to detach the joined adhesive parts (keeping the ends in the horizontal position).

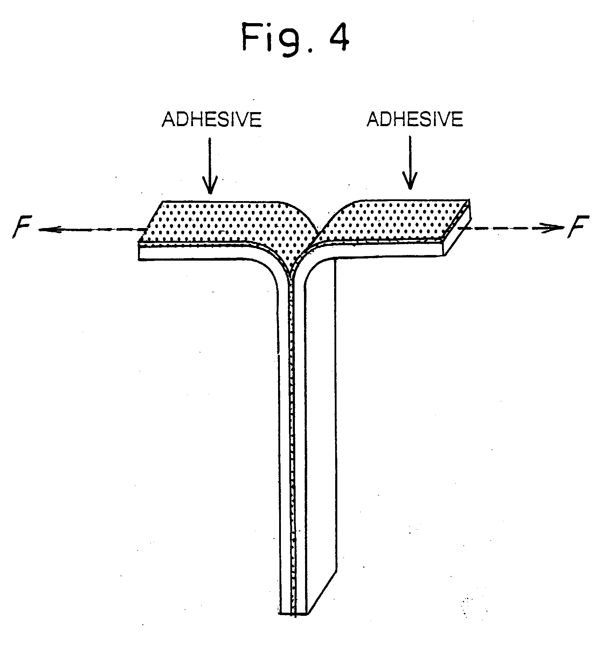

The test is carried out 24 hours after applying the adhesive mass. Fig. 4 is a schematic representation of the implementation of the test; F indicates the force applied to the end of the sample to detach the two parts of the sample adhered to each other.

Measurement of the fixing is carried out by determining the surface area on which, after separation of the two strips of the sample, the adhesive mass is no longer present. This information expressed as a percentage of the total of the surface area subjected to the test, is equivalent to the percentage of adhesive mass which is detached from the support out of the total of the adhesive mass applied.

As a function of the amount of adhesive which is detached from the support, the result of the rest will be referred to as: GOOD if the amount of adhesive mass detached is less than 10% of the total amount applied, MEDIOCRE if the amount of adhesive mass detached is between 10% and 40% of the total amount applied, and POOR if the amount of adhesive mass detached is greater than 40% of the total amount applied.

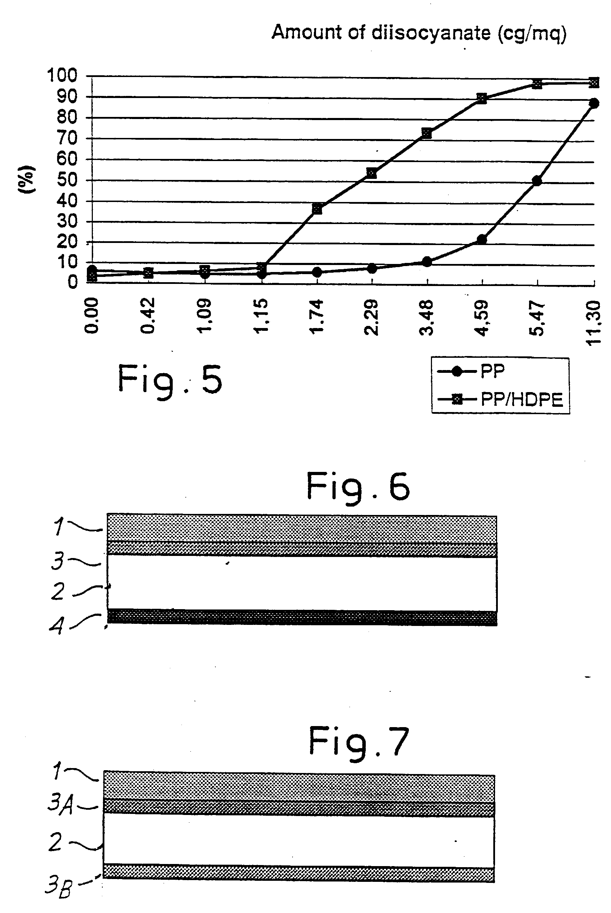

Fig. 5 gives, in graph form, the results of the measurements carried out with samples of adhesive tape prepared with polypropylene (PP) film and of adhesive tape prepared with coextruded film of polypropylene and high-density polyethylene (PP/HDPE) with the adhesive applied to the polyethylene side which has been previously flame-treated. The amounts of adhesive which are not separated from the support are given on the y-axis (as a percentage of the total) and the amounts of crosslinking agent (4,4'-diphenylmethane diisocyanate) added to the adhesive are given on the x-axis. Fig. 6 shows the structure of the adhesive tape with the coextruded support: the reference number 1 indicates the adhesive mass, the reference number 2 indicates the layer of polypropylene, the reference number 3 indicates the layer of high-density polyethylene and the reference number 4 indicates an optional layer of release agent.

The superior result for the PP/HDPE film relative to the conventional PP film is due to the higher density of -OH functional groups present on the layer of treated HDPE than on the treated PP layer; this facilitates the formation of bonds between said functional groups and the-NCO groups of the crosslinking agent (4,4'-diphenylmethane diisocyanate).

Table 4 below gives the data relating to industrial tests which again demonstrate the differences in behavior between the PP film and the PP/HDPE film, which are represented in graph form in Fig. 5. Adhesive based on natural rubber and hydrocarbon resins was applied to the flame-treated side of the film. In this case, the crosslinking agent was applied just before the adhesive layer.

**Table 4**

| FILM | Method | PP/HDPE HDPE side flame-treated | PP side flame-treated | PP/HDPE HDPE side flame-treated | PP side flame-treated | PP/HDPE HDPE side flame-treated | PP side flame-treated |
|---|---|---|---|---|---|---|---|
| LEVEL OF TREATMENT | *ASTM D* 2578 | 54 mN/m | 42 mN/m | 54 mN/m | 42 mN/m | 54 mN/m | 42 mN/m |
| AMOUN T OF ADHESIVE APPLIED (g/m²) | | 17.5 | 18.0 | 23.4 | 22.7 | 18.6 | 17.2 |
| AMOUN T OF CROSSLINKING AGENT APPLIED*(g/m²) | | 0.00 | 0.00 | 0.02 | 0.02 | 0.14 | 0.14 |
| PRIMING (f/f) | | POOR | POOR | GOOD | POOR | GOOD | MEDIOCRE |

| | | | | | | | |
|---|---|---|---|---|---|---|---|
| **4,4'-diphenylmethane* diisocyanate *(Suprasec DNR; ICI Italia S.p.A.)* | | | | | | | |

From Table 4, it is once again seen that the fixing of the mass of adhesive is better in the case of the PP/HDPE coextruded film than in the case of the polypropylene support.

The novel primer-free product maintains technical properties similar to the product obtained using a polypropylene film in which the layer of primer has been applied, as demonstrated by the data given in Table 5 below. This gives, in table form, the result of the industrial test in which an adhesive tape was produced with an adhesive mass based on natural rubber and hydrocarbon resins without applying the layer of primer.

In this case, the crosslinking agent was applied just before the layer of adhesive. Table 5 gives the comparison between the data relating to the testing of the product obtained with the PP/HDPE coextruded film (column 1) and those of the normal production with a polypropylene film (column 2).

**Table 5**

| | | 1 | 2 |
|---|---|---|---|
| TAPE STRUCTURE | Method | • PP/HDPE FILM • Of thickness 28 µm, flame-treated on the HDPE side; • Level of treatment: 54 mN/m; • HDPE MFI 4; • Thickness of HDPE layer: 1.5 µm; • Release agent on the PP side (tape backing); • The layer of primer was not applied; • Amount of crosslinking agent** applied: 0.02 g/m²; • Adhesive based on natural rubber and hydrocarbon resins | • PP film of thickness 28 µm, flame-treated on one side; • Level of treatment: 42 mN/m; • Release agent on the tape backing; • Primer* + crosslinking agent** on the flame-treated side; • Adhesive based on natural rubber and hydrocarbon resins *The range +/- 3σ is indicated in parentheses* |
| TOTAL WEIGHT (g/m²) | | 44.8 | 42.8 (35-51) |
| FILM WEIGHT (g/m²) | | 26.2 | 25.4 (19-31) |
| ADHESIVE WEIGHT (g/m²) | | 18.6 | 17.4 (13-22) |
| METAL ADHESIVENESS (N/25 mm) | AFERA 4001 | 6.6 | 4.6 (2.4-6.7) |
| SUPPORT ADHESIVENESS (N/25 mm) | PSTC-1 | 4.7 | 2.6 (0.8-4.4) |
| FIXING (f/f) | | Good | Good |
| RBT (cm) | PSTC-6 | 4 | 3.9 (1-7) |
| BL (N/cm) | AFERA 4004 | 55.9 | 53.9 (29.4-78.4) |
| ELONGATION (%) | AFERA 4005 | 82 | 99 (49-149) |
| UNWINDING (N/cm) | AFERA 4013 | 1.96 | 0.97 (0.4-1.5) |

| | | | |
|---|---|---|---|
| **solution of natural rubber and cyclized rubber in toluene.* | | | |
| ***4,4'-diphenylmethane diisocyanate (Suprasec DNR; ICI Italia S.p.A).* | | | |

The advantages of such an application can clearly be recognized in lower costs both in terms of energy and in terms of starting materials.

The above results demonstrate the advantages of using a coextruded film in the production of adhesive tapes in two layers, one made of high-density polyethylene and one made of polypropylene. Separately, the advantages derived from applying the adhesive mass to the high-density polyethylene surface (elimination of the primer and/or improved printability) and from applying the adhesive mass to the surface of the polypropylene layer (elimination of the release agent) have been demonstrated. The two results can be added together by preparing an adhesive tape which has a composite structure with an inner layer made of polypropylene and two outer layers made of high-density polyethylene. In this case, the adhesive mass is applied to one of the two free surfaces of one of the two layers of high-density polyethylene, which has undergone a prior flame treatment or corona treatment or the like. The advantage of better fixing of the adhesive mass is thus obtained. The tape backing again consists of a surface made of high-density polyethylene, which thus has high antiadhesive properties and allows easy unwinding without the need to use a layer of release agent.

A three-layer coextruded film can be obtained, for example, with a flat die extruder, of a type which is known per se. The structure of an adhesive tape obtained with this type of film is illustrated schematically in Fig. 7, in which 3A and 3B indicate the layers of HDPE, 2 indicates the layer of polypropylene and 1 indicates the layer of adhesive mass.

It should be understood that the drawing merely shows one embodiment given purely for practical demonstration of the invention, it being possible for changes to be made to the forms and provisions of the invention without, however, departing from the scope of the concept disclosed in this invention.

## Claims

1. An adhesive tape comprising a coextruded support, with at least one layer of polypropylene and one layer of high-density polyethylene, one of the surfaces of said support being treated by a process for increasing its surface energy, and an adhesive mass being applied to said treated surface.

2. Adhesive tape according to Claim 1, characterized in that: the outer surface of the layer of polypropylene is treated by said process for increasing its surface energy and the adhesive mass is applied to this surface; the layer of high-density polyethylene is coupled to the layer of polypropylene on the surface of the latter layer which is opposite the surface onto which the adhesive mass is applied.

3. Adhesive tape according to Claim 2, characterized in that said adhesive mass is based on thermoplastic rubber.

4. Adhesive tape according to Claim 3, characterized in that said adhesive mass comprises a thermoplastic rubber, hydrocarbon resins and processing oil.

5. Adhesive tape according to Claim 2, 3 or 4, characterized in that at least one polyorganosiloxane-based substance is present in said layer of high-density polyethylene.

6. Adhesive tape according to Claim 5, characterized in that a polyorganosiloxane-based substance is present in the layer of high-density polyethylene in an amount of between 0.5 and 1.5% by weight.

7. An adhesive tape according to Claim 1, characterized in that: the outer surface of the layer of high-density polyethylene is treated by said process for increasing its surface energy and the adhesive mass is applied to this surface; the layer of polypropylene is coupled to the layer of high-density polyethylene on the surface of the latter layer opposite the surface on which the adhesive mass is applied.

8. Adhesive tape according to Claim 7, characterized in that a release layer is provided on the outer surface of said layer of polypropylene, opposite the surface on which the layer of high-density polyethylene is applied.

9. Adhesive tape according to Claim 7 or 8, characterized in that a crosslinking agent is added to the adhesive mass.

10. Adhesive tape according to Claim 7, 8 or 9, characterized in that the surface of the layer of high-density polyethylene facing the adhesive mass is printed.

11. Adhesive tape according to Claim 10, characterized in that a primer is applied to said printed surface.

12. Adhesive tape according to one or more of Claims 7 to 11, characterized in that said adhesive mass is based on natural rubber and hydrocarbon resins.

13. Adhesive tape according to one or more of the preceding claims, characterized in that the surface of said support treated in order to increase its surface energy has a surface energy of greater than 42 mN/m.

14. Adhesive tape according to one or more of Claims 2 to 6, characterized in that the surface of said support treated in order to increase its surface energy has a surface energy of between 38 and 42 mN/m and preferably 42 mN/m.

15. Adhesive tape according to one or more of Claims 7 to 12, characterized in that the surface of said support treated in order to increase its surface energy has a surface energy of greater than 45 mN/m and preferably greater than 50 mN/m and even more preferably equal to 54 mN/m.

16. Adhesive tape according to one or more of the preceding claims, characterized in that the layer of polypropylene is thicker than the layer of high-density polyethylene.

17. Adhesive tape according to Claim 16, characterized in that the layer of polypropylene is from 5 to 75 times as thick as the layer of high-density polyethylene.

18. Adhesive tape according to Claim 16 or 17, characterized in that the layer of polypropylene has a thickness of between 19 and 41 micrometers.

19. Adhesive tape according to Claim 16, 17 or 18, characterized in that the layer of high-density polyethylene has a thickness of between 0.5 and 5 micrometers and preferably between 0.5 and 3 micrometers.

20. Adhesive tape according to one or more of the preceding claims, comprising a coextruded support with an intermediate layer made of polypropylene and two outer layers made of high-density polyethylene, an outer surface of one of said layers of high-density polyethylene being treated so as to increase its surface energy, and an adhesive mass being applied to said treated surface.

21. Method for producing an adhesive tape, characterized in that it comprises the phases of:
- co-extruding a support made of polymer material comprising at least one layer of polypropylene and one layer of high-density polyethylene;
- treating at least one of the surfaces of said support by a treatment capable of increasing its surface energy;
- applying an adhesive mass to said treated surface.

22. Method according to Claim 21, characterized in that the outer surface of the layer of polypropylene is treated and the adhesive mass is applied to this layer.

23. Method according to Claim 22, characterized in that an adhesive mass based on thermoplastic rubber is used.

24. Method according to Claim 22 or 23, characterized in that at least one polyorganosiloxane-based substance is added to said layer of high-density polyethylene.

25. Method according to Claim 21, characterized in that the outer surface of the layer of high-density polyethylene is treated and the adhesive mass is applied to this layer.

26. Method according to Claim 25, characterized in that a layer of release agent is applied to the free surface of said layer of polypropylene.

27. Method according to Claim 25 or 26, characterized in that the outer surface of said layer of high-density polyethylene is printed after the treatment for increasing its surface energy, and the adhesive mass is then applied to the printed surface.

28. Method according to Claim 27, characterized in that a primer is applied to the printed surface before applying the adhesive mass to said primer.

29. Method according to one or more of Claims 25 to 28, characterized in that an adhesive mass based on natural rubber and hydrocarbon resins is used.

30. Method according to one or more of Claims 25 to 29, characterized in that an adhesive mass containing a crosslinking agent is used.

31. Method according to one or more of Claims 21 to 30, characterized by the phases of:
- co-extruding a support made of polymer material comprising an intermediate layer made of polypropylene and two outer layers made of high-density polyethylene;
- treating at least one of the surfaces of said support by a treatment capable of increasing its surface energy;
- applying an adhesive mass to said treated surface.
